# EUROPÄISCHE PATENTSCHRIFT

(11) **EP 0 494 651 B1**
(45) Veröffentlichungstag und Bekanntmachung des Hinweises auf die Patenterteilung: **02.11.1995**
(21) Anmeldenummer: 92100176.4
(22) Anmeldetag: 08.01.1992
(51) Int. Cl.: F16B 33/02, F16B 25/00

(54) **Schraube**
Screw
Vis

(30) Priorität: 11.01.1991 DE 9100312 U
(43) Veröffentlichungstag der Anmeldung: 15.07.1992
(73) Patentinhaber: RAHMEDE SCHRAUBENFABRIK GmbH & CO. KG, D-58511 Lüdenscheid (DE)
(72) Erfinder: Gortat, Siegfried, W-5880 Lüdenscheid (DE)
(74) Vertreter: Hassler, Werner, Dr.

(56) Entgegenhaltungen:
- DD-A- 145 654
- DE-A- 2 645 519
- DE-A- 2 756 318
- FR-A- 2 642 801

## Beschreibung

Die Erfindung betrifft eine Schraube, deren Gewinde ein Verhältnis von Außendurchmesser zu Kerndurchmesser von etwa 1,8, einen spitzen Flankenwinkel und eine große Steigung aufweist, wobei der Gewindekern jeweils zwischen benachbarten Gewindegängen mindestens einen nach außen gerichteten, schraubenlinienförmigen Steg (4) aufweist.

Die DE-A-2 756 318 beschreibt eine derartige Schraube zur Befestigung von Bauplatten. Das Holzschraubengewinde mit vergleichsweise großem Flankenwinkel hat eine große Verdrängung, die in weichen Stoffen wie Kunststoff, Spanplatten ungünstig ist. Da die Steigung groß ist, ist die Hebung gering. Infolgedessen benötigt man besondere Sicherungen.

Die FR-A-2 642 801 beschreibt einen Einsatz mit Innengewinde, der eine Bohrspitze und eine doppelgängiges Außengewinde einerseits mit einem spitzen und andererseits mit einem stumpfen Flankenwinkel aufweist. Dieses ist für eine Schraube in weichen Werkstoff ungünstig.

Aufgabe der Erfindung ist eine solche Ausbildung der Schraube, daß dieselbe sowohl in Kunststoff als auch in Blech eingesetzt werden kann und jeweils eine große Hemmung erzielt wird, die praktisch als Selbsthemmung angesehen werden kann.

Diese Aufgabe wird nach der Erfindung dadurch gelost, daß der Flankenwinkel etwa 30° beträgt, daß jeweils zwischen benachbarten Gewindegängen zwei parallel zueinander verlaufende Stege (4) vorgesehen sind und daß die Stege (4) einen Flankenwinkel von etwa 75° aufweisen.

Die Erfindung unterscheidet sich insofern von Stand der Technik, als die Stege eine Vergrößerung der Kernoberfläche bewirken. Durch die Verdichtung des Werkstoffes wird ein dauerhaftes Einschrauben erzielt. Diese Funktion ist mit einem doppelgängigen Gewinde unterschiedlicher Gewindehöhe nicht vergleichbar. Der kleine Flankenwinkel bewirkt eine hohe Festigkeit auch in weichen Stoffen. Günstige Halteeigenschaften erreicht durch einen Flankenwinkel der Stege von etwa 75°.

Eine erhebliche Vergrößerung der Selbsthemmung bei geringer Verdrängung erreicht man dadurch, daß die Stege ein Dreieckprofil haben.

Die Erfindung findet bei Schrauben mit Durchmessern von etwa 3 bis 10 mm Anwendung.

Ausführungsbeispiele der Erfindung werden unter Bezugnahme auf die anliegende Zeichnung erläutert, in der darstellen:
Fig. 1 ein erstes Ausführungsbeispiel,
Fig. 2 eine Einzeldarstellung des Profils,
Fig. 3 ein zweites Ausführungsbeispiel,
Fig. 4 eine entsprechende Einzeldarstellung des Profils und
Fig. 5 ein weiteres Ausführungsbeispiel.

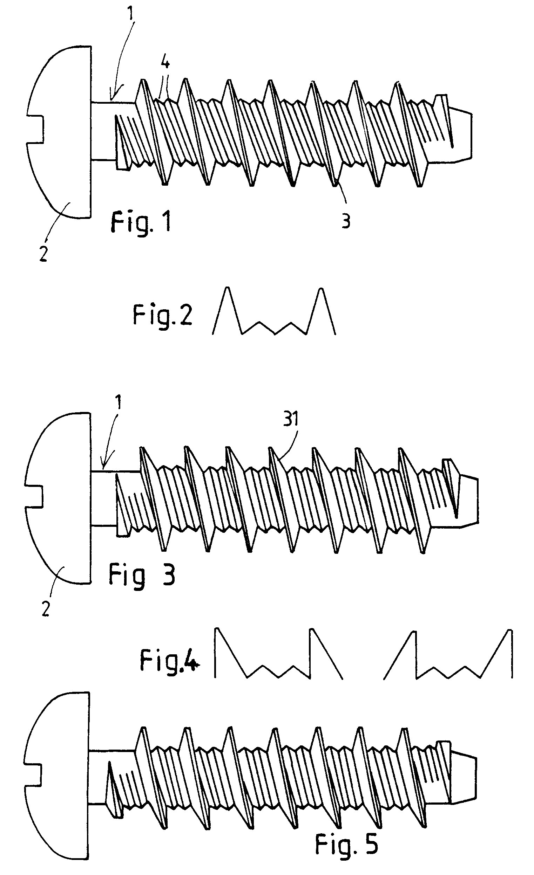

Fig. 1 zeigt eine Schraube 1 mit einem Kopf 2 beliebiger Form und einem steilen, spitzwinkligen Schraubengewinde 3. Zwischen benachbarten Gewindegängen sind auf dem Kern zwei schraubenlinienförmige Stege 4 mit einem Dreieckprofil angeordnet. Das Profil ist in Fig. 2 in Einzelansicht herausgezeichnet. Der Flankenwinkel des Schraubengewindes 3 beträgt 28 bis 32°, die Spitze ist auf eine Breite von etwa 0,1 mm abgeflacht. Der Außendurchmesser beträgt 5 mm. Die Höhe des Schraubengewindes beträgt 1,18 mm. Die Stege haben eine Höhe 0,31 mm und einen Flamkenwinkel von 75°, Mit dieser Vergrößerung der Kernoberfläche ohne Schwächung des Kerndurchmessers erzielt man eine Selbsthemmung. Für andere Schraubendurchmesser im Bereich von 3 bis 10 mm ändern sich die angegebenen Maße entsprechend.

Die Schraube ist für Kunstoffe, Spanplatten, andere Bauplatten und dünne Bleche geeignet. Die Schraube kann eine selbstbohrende Spitze aufweisen. Außerdem kann die Schraube mit Hilfe von Spanbrechernuten selbstfurchend oder selbstschneidend ausgebildet sein.

Die Fig. 3 und 4 zeigen eine ähnliche Schraube, bei der die dem Schraubenkopf zugewandte Flanke des Schraubengangs 31 senkrecht zur Achse ausgerichtet ist.

Fig. 5 zeigt eine Schraube, bei der die von dem Schraubenkopf abgewandte Flanke senkrecht zur Schraubenachse ausgerichtet ist. Die Erfindung ist bei den beschriebenen und ähnlichen Gewindeformen anwendbar.

## Patentansprüche

1. Schraube, deren Gewinde ein Verhältnis von Außendurchmesser zu Kerndurchmesser von etwa 1,8, einen spitzen Flankenwinkel und eine große Steigung aufweist, wobei der Gewindekern jeweils zwischen benachbarten Gewindegängen mindestens einen nach außen gerichteten, schraubenlinienförmigen Steg (4) aufweist, dadurch gekennzeichnet, daß der Flankenwinkel etwa 30° beträgt, daß jeweils zwischen benachbarten Gewindegängen zwei parallel zueinander verlaufende Stege (4) vorgesehen sind wobei jeder Steg (4) einen Flankenwinkel von etwa 75° aufweist.

2. Schraube nach Anspruch 1, dadurch gekennzeichnet, daß die Stege (4) ein Dreieckprofil haben.

3. Schraube nach Anspruch 1 oder 2, dadurch gekennzeichnet, daß eine Gewindeflanke senkrecht zur Schraubenachse ausgerichtet ist.

## Claims

1. A screw whereof the thread has a ratio of outer diameter to core diameter of approximately 1.8, an acute flank angle and a large lead, the thread core having in each case between adjacent threads at least one helical outwardly directed web (4), characterized in that the flank angle is approximately 30°, in that two webs (4) running parallel to one another are provided in each case between adjacent threads, each web (4) having a flank angle of approximately 75°.

2. A screw according to Claim 1, characterized in that the webs (4) have a triangular profile.

3. A screw according to Claim 1 or 2, characterized in that a thread flank is aligned to be perpendicular to the screw axis.

## Revendications

1. Vis, dont le filet présente un rapport entre diamètre externe et diamètre de noyau d'approximativement 1,8, un angle de flanc aigu et un grand pas, dans laquelle le noyau de filet présente chaque fois entre des filets voisins au moins une nervure (4) dirigée vers l'extérieur et en forme de ligne hélicoïdale, caractérisée en ce que l'angle de flanc est d'approximativement 30°, en ce que chaque fois deux nervures (4) qui s'étendent parallèlement l'une à l'autre sont prévues entre des filets voisins, chaque nervure (4) présentant un angle de flanc d'approximativement 75°.

2. Vis suivant la revendication 1, caractérisée en ce que les nervures (4) ont un profil triangulaire.

3. Vis suivant la revendication 1 ou 2, caractérisée en ce qu'un flanc de filet est orienté perpendiculairement à l'axe de la vis.
